# EUROPÄISCHE PATENTSCHRIFT

(11) **EP 3 064 439 B1**
(45) Veröffentlichungstag und Bekanntmachung des Hinweises auf die Patenterteilung: **24.04.2019**
(21) Anmeldenummer: 16158496.6
(22) Anmeldetag: 03.03.2016
(51) Int. Cl.: B64G 7/00, G01N 3/303

(54) **VORRICHTUNG ZUM EXPERIMENTIEREN UNTER WELTRAUMBEDINGUNGEN**
DEVICE FOR EXPERIMENTING IN SPACE CONDITIONS
DISPOSITIF DESTINE A DES EXPERIMENTATIONS DANS DES CONDITIONS DE L'ESPACE

(30) Priorität: 05.03.2015 DE 202015001929 U
(43) Veröffentlichungstag der Anmeldung: 07.09.2016
(73) Patentinhaber: Deutsches Zentrum für Luft- und Raumfahrt e.V., 51147 Köln (DE)
(72) Erfinder: RITSCHEL, Christian, 10369 Berlin (DE); BOHNHARDT, Tobias, 12557 Berlin (DE); PAWEK, Christoph, 10969 Berlin (DE)
(74) Vertreter: Patentanwälte Bressel und Partner mbB

(56) Entgegenhaltungen:
- EP-A1- 2 631 184
- DE-U1- 8 802 418
- DE-U1- 20 213 955
- JP-A- H0 491 000
- JP-A- H06 298 200

## Beschreibung

Die Erfindung betrifft eine Vorrichtung zum Experimentieren unter Weltraumbedingungen.

Aus der DE 202 13 955 U1 ist eine Vorrichtung zum Experimentieren unter Weltraumbedingungen bekannt, die einen Fallturm und eine Fallkapsel aufweist. Dabei wird weiter vorgeschlagen, dass die Fallkapsel eine CCD-Kamera und eine Videofunkeinheit aufweist. Dabei werden die Videoinformationen über eine Bildverarbeitungskarte digital einem PC zur Verfügung gestellt. Dabei wird unter anderem ein Elektromagnet als Ausklinksystem vorgeschlagen, der bei Abschaltung die Fallkapsel freigibt. Derartige Vorrichtungen werden neben dem Wissenschaftsbetrieb auch in Schulen, Schülerlaboren, Servicecentern und Universitäten eingesetzt.

Der Erfindung liegt das technische Problem zugrunde, eine gattungsgemäße Vorrichtung unter Sicherheitsaspekten zu verbessern.

Die Lösung des technischen Problems ergibt sich durch eine Vorrichtung mit den Merkmalen des Anspruchs 1. Weitere vorteilhafte Ausgestaltungen ergeben sich aus den Unteransprüchen.

Hierzu umfasst die Vorrichtung zum Experimentieren unter Weltraumbedingungen einen Fallturm, eine Fallkapsel und eine Auswerte- und Steuereinheit. Die Vorrichtung weist mindestens einen von der Auswerte- und Steuereinheit ansteuerbaren Elektromagneten als Halteeinrichtung auf. Zusätzlich weist die Halteeinrichtung mindestens einen Permanentmagneten auf, der die Fallkapsel am Fallturm hält.

Die Auswerte- und Steuereinheit und der Elektromagnet sind derart ausgebildet, dass durch Ansteuerung des Elektromagneten durch die Auswerte- und Steuereinheit der Elektromagnet ein Magnetfeld erzeugt, dass das Magnetfeld des Permanentmagneten derart abschwächt, dass die Fallkapsel nicht mehr durch den Permanentmagneten gehalten wird. Der Vorteil dieser Anordnung ist, dass statisch eine Haltekraft durch den Permanentmagneten aufgebracht wird, sodass Leitungsunterbrechungen oder Spannungsausfälle während der Vorbereitung des Experiments nicht zu einem versehentlichen Auslösen der Fallkapsel führen können.

Dabei kann die Halteeinrichtung aus Permanentmagnet und Elektromagnet an der Fallkapsel oder dem Fallturm angeordnet sein, wobei letzteres bevorzugt ist, da dann eine Verkabelung des Elektromagneten keinen Bewegungen ausgesetzt ist. Es ist jedoch auch möglich, den Elektromagneten über eine Luftschnittstelle anzusteuern.

In einer alternativen Ausführungsform wird die Halteeinrichtung aufgeteilt, d.h. dass ein Magnet dem Fallturm und der andere Magnet der Fallkapsel zugeordnet ist bzw. an diesen angeordnet ist. In diesem Fall ist vorzugsweise der Permanentmagnet der Fallkapsel zugeordnet, sodass auch hier die Verkabelung des Elektromagneten nicht bewegt werden muss. Aber auch hier ist es möglich, auf die Verkabelung zu verzichten und den Elektromagneten über eine Luftschnittstelle anzusteuern.

Es versteht sich, dass, je nachdem wo der Permanentmagnet angeordnet ist, das Gegenstück am Fallturm oder der Fallkapsel aus magnetisierbarem Material, insbesondere Metall, ausgebildet sein muss.

In einer weiteren Ausführungsform ist in der Fallkapsel eine Kamera angeordnet, um die Experimente zu beobachten. Die Kamera ist dabei vorzugsweise als sogenannte Action Cam ausgebildet, die sehr robust sind und Bilddaten in hoher Qualität liefern, beispielsweise für Zeitlupen-Wiedergaben.

In einer weiteren Ausführungsform ist in der Fallkapsel eine Beleuchtungsquelle, vorzugsweise eine LED-Beleuchtung, angeordnet, um das Experiment für die Kamera ausreichend auszuleuchten. Besonders vorteilhaft kommt dies bei geschlossenen Fallkapseln zum Tragen, die nur wenig Umgebungslicht einlassen.

In einer weiteren Ausführungsform weist die Fallkapsel mindestens einen Beschleunigungssensor und/oder mindestens einen Luftdrucksensor und/oder mindestens einen Magnetfeldsensor auf, sodass beispielsweise die Fallbeschleunigung und die Zunahme des Luftdrucks während des Falls gemessen werden können. Mittels des Magnetfeldsensors kann beispielsweise das Erdmagnetfeld gemessen werden.

In einer weiteren Ausführungsform weist die Kamera eine Luftschnittstelle auf, die derart ausgebildet ist, dass Bilddaten der Kamera in Echtzeit und/oder in einem Speicher der Kamera zwischengespeicherte Daten an die Auswerte- und Steuereinheit übertragen werden. Insbesondere bei zeitlich hochaufgelösten Bilddaten stößt eine Übertragung in Echtzeit an Grenzen, sodass dann die Zwischenspeicherung zu bevorzugen ist. Ein weiterer Vorteil der Zwischenspeicherung ist, dass bei Fehlübertragungen aufgrund von Störungen die Daten nicht verloren sind und über transportable Speichermedien oder eine geeignete Verkabelung zur Auswerte- und Speichereinheit übertragen werden können, wo diese dann dargestellt werden können.

In einer weiteren Ausführungsform weisen die Beleuchtungsquelle und/oder der Beschleunigungssensor und/oder der Luftdrucksensor und/oder der Magnetfeldsensor mindestens eine Luftschnittstelle auf oder diesen ist eine Luftschnittstelle zugeordnet. Dabei ist die Luftschnittstelle derart ausgebildet, dass Sensordaten in Echtzeit und/oder in einem Speicher zwischengespeicherte Sensordaten an die Auswerte- und Steuereinheit übertragen werden und/oder Steuerbefehle für die Beleuchtungsquelle und/oder die Sensoren von der Auswerte- und Steuereinheit empfangen werden.

In einer weiteren Ausführungsform sind die Luftschnittstelle für die Kamera und die Luftschnittstelle der Sensoren und der Beleuchtung auf unterschiedliche Frequenzbänder abgestimmt, sodass sich diese bei der Datenübertragung möglichst wenig stören. Vorzugsweise ist die Luftschnittstelle der Kamera als WLAN-Schnittstelle und die Luftschnittstelle der Beleuchtung und/oder der Sensoren als Bluetooth-Schnittstelle ausgebildet.

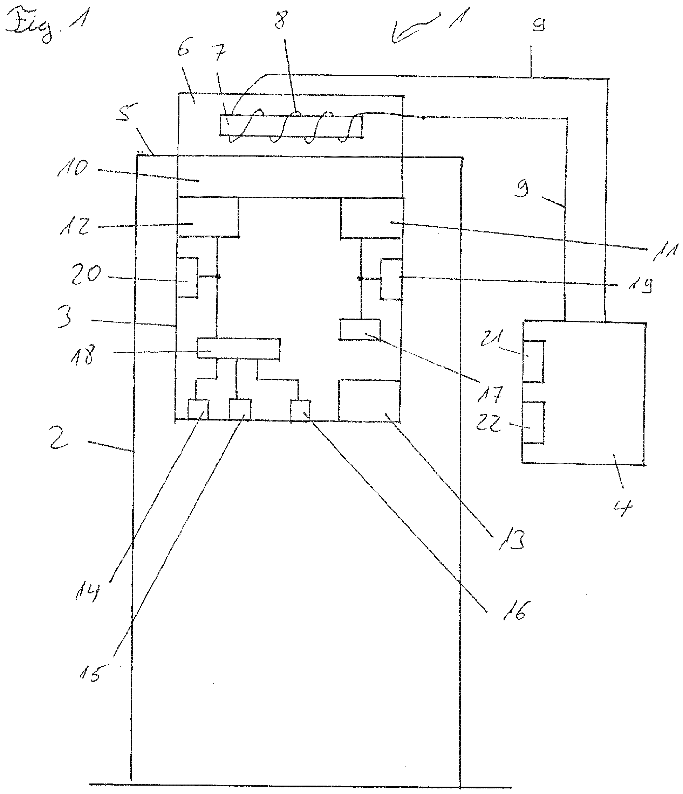

Die Erfindung wird nachfolgend anhand eines bevorzugten Ausführungsbeispiels näher erläutert. Die einzige Figur zeigt ein schematisches Blockschaltbild einer Vorrichtung zum Experimentieren unter Weltraumbedingungen.

Die Vorrichtung 1 umfasst einen Fallturm 2, eine Fallkapsel 3 und eine Auswerte- und Steuereinheit 4. Auf einem Dach 5 des Fallturms 2 ist eine Halteeinrichtung 6 angeordnet, die einen Permanentmagneten 7 sowie einen Elektromagneten 8 aufweist. Der Elektromagnet 8 ist über Leitungen 9 mit der Auswerte- und Steuereinheit 4 verbunden. Die Fallkapsel 3 weist im Dachbereich eine Metallplatte 10 auf. In der Fallkapsel 3 sind eine Kamera 11, eine Beleuchtungsquelle 12, ein Weltraumexperiment 13, ein Beschleunigungssensor 14, ein Luftdrucksensor 15, ein Magnetfeldsensor 16, zwei Speicher 17, 18 sowie zwei Luftschnittstellen 19, 20 angeordnet, wobei der Speicher 17 und die Luftschnittstelle 19 mit der Kamera 11 verbunden sind. Entsprechend verfügt die Auswerte- und Steuereinheit 4 über zwei Luftschnittstellen 21, 22, die auf die Luftschnittstellen 19, 20 der Fallkapsel 3 abgestimmt sind.

Zur Vorbereitung des Experiments wird die Fallkapsel 3 mittels der Metallplatte 10 an dem Fallturm 2 aufgrund der Magnetkraft des Permanentmagneten 7 befestigt. Sollte es während der Vorbereitung zu einer Leitungsunterbrechung der Leitungen 9 kommen (einschließlich versehentlich gezogener Steckverbindungen), so bleibt die Fallkapsel 3 durch den Permanentmagneten 7 gesichert. Die Auswerte- und Steuereinheit 4 kann dann in der Vorbereitungsphase über die Luftschnittstellen 21, 22 die Kommunikation mit den Bauteilen der Fallkapsel 3 überprüfen und eine Spannungsversorgung für den Elektromagneten 8 einschalten. Im Falle der erfolgreichen Prüfung kann dies auf einer Anzeigeeinheit der Auswerte- und Steuereinheit 4 angezeigt werden oder aber der Nutzer kann bei Problemen über notwendige manuelle Vorgänge informiert werden. Weiter können bereits Bilddaten und/oder Sensordaten übertragen und angezeigt werden. Anhand der Bilddaten kann dann der Nutzer beispielsweise die Helligkeit der Beleuchtungsquelle 12 nachregeln, wobei die Steuerbefehle über die Luftschnittstelle 22 an die Luftschnittstelle 20 übertragen werden.

Nach Abschluss der Vorbereitungen kann dann das Experiment gestartet werden, wozu der Elektromagnet 8 entsprechend bestromt wird, um ein das Magnetfeld des Permanentmagneten 7 kompensierendes Magnetfeld zu erzeugen. Als Ergebnis löst sich die Fallkapsel 3 und fällt zu Boden. Während des Falls zeichnet die Kamera 11 den Ablauf des Experiments 13 auf. Dabei werden die Bilddaten in den Speicher 17 geschrieben. Parallel werden die Sensordaten der Sensoren 14-16 in dem Speicher 18 abgespeichert. Die Datenaufzeichnung kann dabei um eine bestimmte Zeit nach dem Aufprall der Fallkapsel fortgesetzt werden. Anschließend werden die Daten aus dem Speicher 17, 18 über die Luftschnittstellen 19, 20 an die Luftschnittstellen 21, 22 übertragen und in der Auswerte- und Speichereinheit 4 für die Darstellung aufbereitet.

Alternativ zur Befestigung am Dach 5 des Fallturms 2 kann die Fallkapsel 3 auch am Boden des Fallturms 2 für einen Katapultstart befestigt sein, so wie dies in der DE 202 13 955 U1 beschrieben ist.

## Patentansprüche

1. Vorrichtung (1) zum Experimentieren unter Weltraumbedingungen, umfassend einen Fallturm (2), eine Fallkapsel (3) und eine Auswerte- und Steuereinheit (4), wobei die Vorrichtung (1) mindestens einen von der Auswerte- und Steuereinheit (4) ansteuerbaren Elektromagneten (8) als Halteeinrichtung (6) aufweist,
**dadurch gekennzeichnet, dass**
die Halteeinrichtung (6) zusätzlich mindestens einen Permanentmagneten (7) aufweist, der die Fallkapsel (3) am Fallturm (2) hält, wobei die Auswerte- und Steuereinheit (4) und der Elektromagnet (8) derart ausgebildet sind, dass durch Ansteuerung des Elektromagneten (8) durch die Auswerte- und Steuereinheit (4) der Elektromagnet (8) ein Magnetfeld erzeugt, das das Magnetfeld des Permanentmagneten (7) derart abschwächt, dass die Fallkapsel (3) nicht mehr durch den Permanentmagneten (7) gehalten wird.

2. Vorrichtung nach Anspruch 1, **dadurch gekennzeichnet, dass** die Halteeinrichtung (6) am Fallturm (2) angeordnet ist.

3. Vorrichtung nach Anspruch 1, **dadurch gekennzeichnet, dass** der Permanentmagnet (7) an dem Fallturm (2) und der Elektromagnet (8) an der Fallkapsel (3) angeordnet ist oder der Permanentmagnet (7) an der Fallkapsel (3) und der Elektromagnet (8) an dem Fallturm (2) angeordnet ist.

4. Vorrichtung nach einem der vorangegangenen Ansprüche, **dadurch gekennzeichnet, dass** in der Fallkapsel (3) eine Kamera (11) angeordnet ist.

5. Vorrichtung nach Anspruch 4, **dadurch gekennzeichnet, dass** in der Fallkapsel (3) eine Beleuchtungsquelle (12) angeordnet ist.

6. Vorrichtung nach einem der vorangegangenen Ansprüche, **dadurch gekennzeichnet, dass** die Fallkapsel (3) mindestens einen Beschleunigungssensor (14) und/oder mindestens einen Luftdrucksensor (15) und/oder mindestens einen Magnetfeldsensor (16) aufweist.

7. Vorrichtung nach einem der Ansprüche 4 bis 6, **dadurch gekennzeichnet, dass** die Kamera (11) eine Luftschnittstelle (19) aufweist, die derart ausgebildet ist, dass Bilddaten der Kamera (11) in Echtzeit und/oder in einem Speicher (17) der Kamera (11) zwischengespeicherte Daten an die Auswerte- und Steuereinheit (4) übertragen werden.

8. Vorrichtung nach einem der Ansprüche 5 bis 7, **dadurch gekennzeichnet, dass** die Beleuchtungsquelle (12) und/oder der Beschleunigungssensor (14) und/oder der Luftdrucksensor (15) und/oder der Magnetfeldsensor (16) mindestens eine Luftschnittstelle (20) aufweisen, die derart ausgebildet ist, dass Sensordaten in Echtzeit und/oder in einem Speicher (18) zwischengespeicherte Sensordaten an die Auswerte- und Steuereinheit (4) übertragen werden und/oder Steuerbefehle für die Beleuchtungsquelle (12) und/oder die Sensoren (14-16) von der Auswerte- und Steuereinheit (4) empfangen werden.

9. Vorrichtung nach Anspruch 8, **dadurch gekennzeichnet, dass** die Luftschnittstelle (19) der Kamera (11) und die Luftschnittstelle (20) der Sensoren (14-16) und der Beleuchtung (12) auf unterschiedliche Frequenzbänder abgestimmt sind.

10. Vorrichtung nach Anspruch 9, **dadurch gekennzeichnet, dass** die Luftschnittstelle (19) der Kamera (11) als WLAN-Schnittstelle und die Luftschnittstelle (20) der Beleuchtungsquelle (12) und/o der der Sensoren (14-16) als Bluetooth-Schnittstelle ausgebildet ist.

## Claims

1. Device (1) for experimenting in space conditions, comprising a falling tower (2), a falling capsule (3) and an evaluation and control unit (4), the device (1) having as a holding device (6) at least one electromagnet (8) that can be activated by the evaluation and control unit (4),
**characterized in that**
the holding device (6) additionally has at least one permanent magnet (7), which holds the falling capsule (3) on the falling tower (2), the evaluation and control unit (4) and the electromagnet (8) being designed in such a way that activation of the electromagnet (8) by the evaluation and control unit (4) causes the electromagnet (8) to generate a magnetic field that weakens the magnetic field of the permanent magnet (7) in such a way that the falling capsule (3) is no longer held by the permanent magnet (7).

2. Device according to Claim 1, **characterized in that** the holding device (6) is arranged on the falling tower (2).

3. Device according to Claim 1, **characterized in that** the permanent magnet (7) is arranged on the falling tower (2) and the electromagnet (8) is arranged on the falling capsule (3) or the permanent magnet (7) is arranged on the falling capsule (3) and the electromagnet (8) is arranged on the falling tower (2).

4. Device according to one of the preceding claims, **characterized in that** a camera (11) is arranged in the falling capsule (3).

5. Device according to Claim 4, **characterized in that** a lighting source (12) is arranged in the falling capsule (3).

6. Device according to one of the preceding claims, **characterized in that** the falling capsule (3) has at least one acceleration sensor (14) and/or at least one air pressure sensor (15) and/or at least one magnetic field sensor (16).

7. Device according to one of Claims 4 to 6, **characterized in that** the camera (11) has an air interface (19), which is designed in such a way that image data of the camera (11) are transmitted in real time to the evaluation and control unit (4) and/or data buffer-stored in a memory (17) of the camera (11) are transmitted to the evaluation and control unit (4).

8. Device according to one of Claims 5 to 7, **characterized in that** the lighting source (12) and/or the acceleration sensor (14) and/or the air pressure sensor (15) and/or the magnetic field sensor (16) have at least one air interface (20), which is designed in such a way that sensor data are transmitted in real time to the evaluation and control unit (4) and/or sensor data buffer-stored in a memory (18) are transmitted to the evaluation and control unit (4) and/or control commands for the lighting source (12) and/or the sensors (14-16) are received from the evaluation and control unit (4).

9. Device according to Claim 8, **characterized in that** the air interface (19) of the camera (11) and the air interface (20) of the sensors (14-16) and of the lighting (12) are tuned to different frequency bands.

10. Device according to Claim 9, **characterized in that** the air interface (19) of the camera (11) is designed as a WLAN interface and the air interface (20) of the lighting source (12) and/or of the sensors (14-16) is designed as a Bluetooth interface.

## Revendications

1. Dispositif (1) d'expérimentation dans des conditions spatiales, comprenant une tour de chute (2), une capsule de chute (3) et une unité d'évaluation et de commande (4),
le dispositif (1) comportant comme dispositif de retenue (6) au moins un électroaimant (8) pouvant être commandé par l'unité d'évaluation et de commande (4), **caractérisé en ce que**
le dispositif de retenue (6) comporte en outre au moins un aimant permanent (7) qui maintient la capsule de chute (3) au niveau de la tour de chute (2), l'unité d'évaluation et de commande (4) et l'électroaimant (8) étant conçus de manière à ce que, par le biais de la commande de l'électroaimant (8) par l'unité d'évaluation et de commande (4), l'électroaimant (8) génère un champ magnétique qui atténue le champ magnétique de l'aimant permanent (7) de telle sorte que la capsule de chute (3) ne soit plus maintenue par l'aimant permanent (7).

2. Dispositif selon la revendication 1, **caractérisé en ce que** le dispositif de retenue (6) est disposé au niveau de la tour de chute (2).

3. Dispositif selon la revendication 1, **caractérisé en ce que** l'aimant permanent (7) est disposé au niveau de la tour de chute (2) et l'électroaimant (8) est disposé au niveau de la capsule de chute (3) ou l'aimant permanent (7) est disposé au niveau de la capsule de chute (3) et l'électroaimant (8) est disposé au niveau de la tour de chute (2).

4. Dispositif selon l'une des revendications précédentes, **caractérisé en ce qu'**une caméra (11) est disposée dans la capsule de chute (3).

5. Dispositif selon la revendication 4, **caractérisé en ce qu'**une source d'éclairage (12) est disposée dans la capsule de chute (3).

6. Dispositif selon l'une des revendications précédentes, **caractérisé en ce que** la capsule de chute (3) comporte au moins un capteur d'accélération (14) et/ou au moins un capteur de pression d'air (15) et/ou au moins un capteur de champ magnétique (16).

7. Dispositif selon l'une des revendications 4 à 6, **caractérisé en ce que** la caméra (11) comporte une interface d'air (19) qui est conçue pour transmettre à l'unité d'évaluation et de commande (4) des données d'image de la caméra (11) en temps réel et/ou des données mémorisées temporairement dans une mémoire (17) de la caméra (11).

8. Dispositif selon l'une des revendications 5 à 7, **caractérisé en ce que** la source d'éclairage (12) et/ou le capteur d'accélération (14) et/ou le capteur de pression d'air (15) et/ou le capteur de champ magnétique (16) comportent au moins une interface d'air (20) qui est conçue pour transmettre à l'unité d'évaluation et de commande (4) des données de capteur en temps réel et/ou des données de capteur mémorisées temporairement dans une mémoire (18) et pour recevoir de l'unité d'évaluation et de commande (4) des instructions de commande destinée à la source d'éclairage (12) et/ou aux capteurs (14-16).

9. Dispositif selon la revendication 8, **caractérisé en ce que** l'interface d'air (19) de la caméra (11) et l'interface d'air (20) des capteurs (14-16) et l'éclairage (12) sont réglés sur différentes bandes de fréquences.

10. Dispositif selon la revendication 9, **caractérisé en ce que** l'interface d'air (19) de la caméra (11) est une interface WLAN et l'interface d'air (20) de la source d'éclairage (12) et/ou des capteurs (14-16) est une interface Bluetooth.
